Europäisches Patentamt

European Patent Office

Office européen des brevets

(11) Publication number: **0 176 682**
**B1**

(12) **EUROPEAN PATENT SPECIFICATION**

(45) Date of publication of patent specification: **06.12.89**

(51) Int. Cl.⁴: **G 05 G 9/18**

(21) Application number: **85109163.7**

(22) Date of filing: **22.07.85**

(54) Mechanical transmission between an industrial vehicle gear lever and the gearbox.

(30) Priority: **24.07.84 IT 5366684 u**

(43) Date of publication of application:
**09.04.86 Bulletin 86/15**

(45) Publication of the grant of the patent:
**06.12.89 Bulletin 89/49**

(84) Designated Contracting States:
**DE FR GB SE**

(56) References cited:
**WO-A-80/01054**
**DE-A-2 527 407**
**FR-A-1 373 591**
**GB-A-2 006 898**
**US-A-4 206 826**
**US-A-4 355 543**

(73) Proprietor: **IVECO FIAT S.p.A.**
**Via Puglia 35**
**I-10156 Torino (IT)**

(72) Inventor: **Magrini, Guido**
**Via Aquileia, 3B**
**I-25100 Brescia (IT)**

(74) Representative: **Bongiovanni, Guido et al**
**STUDIO TORTA Società Semplice Via Viotti 9**
**I-10121 Torino (IT)**

Courier Press, Leamington Spa, England.

## Description

This invention relates to a mechanical transmission between an industrial vehicle gear lever and the gearbox, which allows transmission of the movements required for selecting and engaging the various gear wheel pairs of said gearbox.

The transmission according to the utility model is of the type which enables the gear lever to be separated in order to allow the floor of the tiltable cab of the vehicle to which said lever is connected to be raised.

Known transmissions of this type comprise substantially a transmission bar having one end configured as a crank to be connected to the gear lever, and the other end connected to the gearbox itself by means of suitable articulated joints. The said crank-configured end is normally provided with a ball joint element arranged to house a corresponding spherical head provided on the end of the gear lever, and the transmission bar is secured to the vehicle frame in such a manner as to be able to move axially and to rotate substantially about the axis of said crank. With this constructional arrangement, in order to select a suitable gear, the gear lever is operated in such a manner as to rotate said crank and consequently the transmission bar, whereas in order to engage a required pair of gear wheels, the gear lever is operated in such a manner as to cause the "engagement" transmission bar to undergo translational movement. When the vehicle cab is to be raised from the frame by causing it substantially to rotate about a shaft disposed in the front end of said cab, the gear lever rises together with the cab floor, and thus the said spherical head provided on the end of said lever becomes separated from the ball joint element provided on the said crank-configured end.

Mechanical transmissions of the described type have certain drawbacks. Firstly, such transmissions cannot be used if the vehicle cab is able to move relative to the vehicle frame, as happens in those constructions which comprise an elastic system between the cab and frame in order to provide a further suspension between the former and latter for improving running comfort. This is because in such a case, the position of the spherical head at the end of the gear lever varies at every instant relative to the corresponding seat in the transmission crank, and a stable connection between said parts cannot therefore be attained. Furthermore, even when this supplementary suspension between the cab and frame is entirely absent, and thus no relative movements are produced between said head and the relative seat in the crank, the operation by which the gear lever becomes connected to the crank cannot be performed smoothly, but instead impacts usually occur between the head and seat which can give rise to noise and ultimately damage said parts. Finally, if the position of said parts relative to each other has not been adjusted in a sufficiently correct manner, the engagement between the head and seat can easily produce overloading of the crank or gear lever, and this can result in damage to said members.

In GB—A—2 006 898 there is described a mechanical linkage intended for a heavy vehicle of the kind having a gear-box solidarly mounted on the vehicle frame, a tiltable and/or liftable vehicle cab, and a gear-shift-lever, so mounted on a base-wall of said vehicle cab, that one end thereof protrudes downwards of the base-wall; said mechanical linkage is disposed between the gear-shift-lever and the gear-box, and so arranged as to be connected, in use, with the gear-shift-lever, thereby allowing the gear-shift-lever to transmit to the gear-box selecting, respectively, engaging movements required to select, respectively, engage gear-wheel-pairs of the gear-box, and disconnected from the gear-shift-lever, thereby allowing the base-wall, on which the gear-shift-lever is mounted, to be tilted and/or lifted together with the vehicle cab.

Said mechanical linkage comprises a transmission bar having a first end connected to said gear-box, and being secured, through a rocker lever, to the vehicle-frame, in such a way as to be able to glide axially along its longitudinal axis and to rotate about said longitudinal axis; the rocker lever has a first end connected to said vehicle-frame for pivotal movement of the rocker lever in a substantially vertical plane containing said longitudinal axis, and a second end connected, through a ball-joint, to the transmission bar, near a second end thereof.

Furthermore DE—A—2 527 407 discloses some elastical suspensions for a mechanical linkage of the kind referred to by the present application.

The object of the present invention is to provide a mechanical transmission between a heavy vehicle gear lever and the gearbox which is of the initially stated type and which obviates the described drawbacks, in particular by making it possible to obtain correct connection between the lever and transmission even when the vehicle cab is suspended elastically relative to the vehicle frame, and in addition allowing the operations required for making and breaking the connection between the lever and transmission to be performed smoothly and without impacts, and making correct operation possible even when the position of the gear lever has not been perfectly adjusted relative to the other parts of the transmission.

This object is attained according to the invention by a mechanical linkage as defined in appended Claim 1.

The present invention will be more apparent from the description of two different embodiments thereof given by way of example hereinafter with reference to the figures of the accompanying drawings, in which:

Figure 1 is a section through the end part of the transmission according to the invention;

Figure 2 is a section through the end part of a different embodiment of the transmission according to the invention.

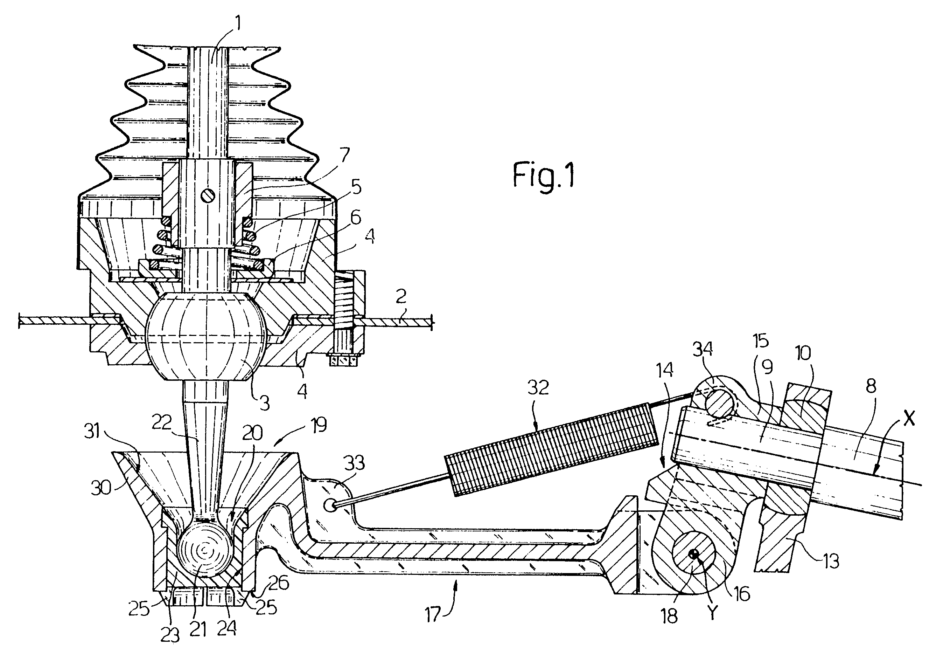

With reference firstly to Figure 1, the mechanical transmission according to the invention is arranged for connection between the gear lever 1 of an industrial vehicle and the gearbox of said vehicle (not shown). Said lever is fixed to the base wall 2 of the vehicle cab by a ball joint connection. For this purpose, the lever is provided with an enlargement 3 bounded by a substantially spherical surface and inserted into seats of corresponding shape provided in a pair of rings 4 fixed to said wall. Conveniently, said lever is also provided with a spiral spring 5, one end of which rests on a cup 6 which rests on the ring 4, and the other end of which rests on a bush 7 fixed to said lever, in order to keep said lever constantly in a configuration in which its axis is substantially vertical.

The transmission between the lever 1 and gearbox comprises substantially a transmission bar 8, of which only one end is shown in Figure 1, and which is secured to the vehicle frame in such a manner as to be able to undergo the movements which are required for selecting and engaging the gear wheel pairs of the gearbox; said movements comprise the rotation of the bar around its longitudinal axis X and the translation of the bar in the plane of the drawings. For this purpose, it comprises an end pin 9 engaged in a ball joint 10 housed in the upper end of a rocker lever 13, the lower end of which is hinged to the frame in such a manner as to enable it to rock substantially in the plane of Figure 1. The other end of the bar is connected to the vehicle gearbox by suitable couplings in a manner not shown.

The transmission according to the invention comprises a crank 14 connected to the pin 9 of the bar 8 and having substantially a hub part 15 and a radial projection 16. The transmission also comprises a rocker lever 17, one end of which is hinged to the projection 16 by means of a pin 18, whose axis Y is orthogonal to the axis X of the transmission bar, and the other end of which comprises a ball joint element 19. This latter is provided substantially with a spherical seat 20 arranged to constitute a housing for a spherical head 21 provided on the end 22 of the gear lever 1. Conveniently, said spherical seat is formed inside a bush 23 of synthetic material disposed in a corresponding housing formed in said end. Conveniently, in order to enable said bush to be fixed to the initially stated end, said bush is provided with a plurality of radial teeth 25 projecting from the lower surface of the bush and arranged to snap elastically against a shoulder 26, as shown in Figure 1.

Above and in proximity to the spherical seat 20 there is provided a substantially conical wall 30, the conical inner surface 31 of which substantially blends into the surface of the spherical seat 20. The rocker lever 17 is supported elastically by means of a spiral spring 32, of which one end is fixed to a projection 33 on said lever and the other end is fixed to a projection 34 on the hub 15 of the crank 14.

Said spring is disposed in a position such as to support the rocker lever 17 substantially in a horizontal position.

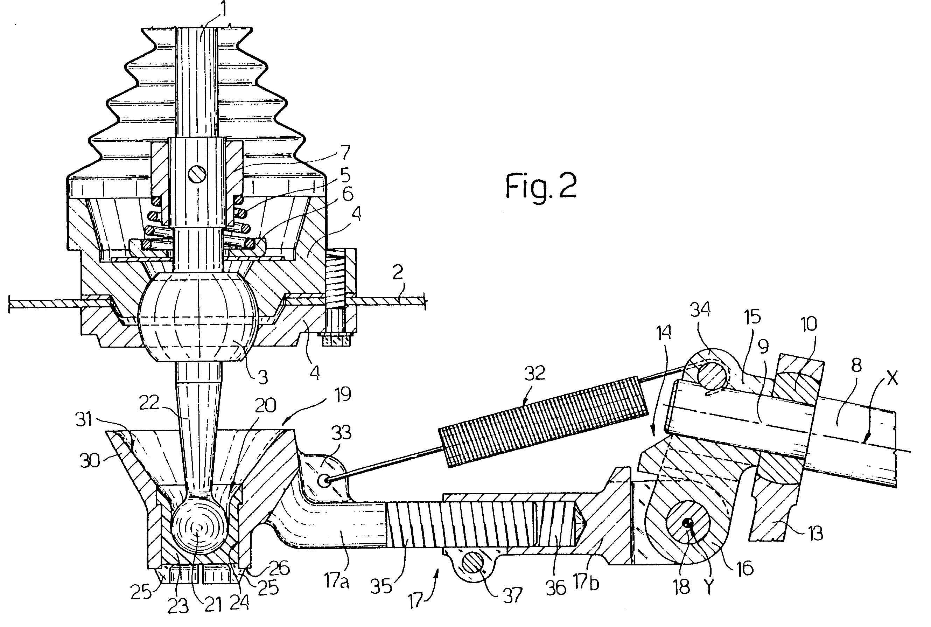

The embodiment of Figure 2 differs from that of Figure 1 only in that the rocker lever 17 comprises two separate parts connected together in an adjustable manner so as to be able to vary the overall length of the lever. For this purpose, one of said parts, indicated by 17a, is provided with a threaded shank 35 arranged for insertion into a corresponding threaded bore 36 provided in the other part 17b of said lever. Conveniently, a locking screw 37 enables the two parts 17a and 17b to be set in a required position.

The operation of the described transimission is as follows.

When the gear lever 1 is connected to the other part of the transmission as shown in the figures, i.e. in which the spherical head 21 of said lever is inserted into the corresponding spherical seat 20 of the rocker lever 17, the lever can be operated in order to transmit the movements required for selecting and engaging the gears. The selection movements are obtained by moving the lever 1 in planes substantially orthogonal to the plane of the figures so as to transmit, by way of the rocker lever 17 and crank 14, a moment such as to cause said crank to rotate about the axis of the pin 9 and thus to cause the transmission bar 8 to rotate about the axis X. When the movements required for engaging the gears are to be transmitted, the lever 1 is moved in planes substantially parallel to the plane of the figures, so that forces acting substantially in said plane are transmitted to the bar 8 by way of the rocker lever 17, to cause the rocker lever 13 to rock in the same plane around the axis Y.

When the vehicle cab is rotated about the front shaft of said cab and thus its floor 2 is raised, the spherical head 21 of the lever 1 separates from the corresponding seat 20. Under such circumstances, the rocker lever 17 is supported by the spiral spring 32 which, in the absence of forces transmitted to the seat 20 by the head 21, tends to retain said lever in a more raised position than that shown in the figures. Subsequently, when the cab is lowered, the engagement between the spherical head and the seat 20 is smooth and progressive because of the presence of the spring 32, which follows the rocking motion of the lever 17 during this operation. If the floor 2 moves relative to the vehicle frame during vehicle operation by virtue of suspensions (not shown) interposed between said cab and the frame, the head 21 of the lever 1 undergoes substantially vertical movements, which simply cause the lever 17 to rock about the pin 18.

During the operations involved in engaging the head 21 in the seat 20, the conical surface 31 is able to act as a guide in producing said engagement, and this is possible even if the gear lever has been moved into any other position than the idle position in which the lever axis is substantially vertical.

It is therefore apparent that with the transmission according to the invention it is possible to obtain correct transmission of the movements required for controlling the gearbox, even when the base wall 2 of the cab moves relative to the vehicle frame, as happens when the cab is suspended elastically relative to said frame. Moreover, the operations involved in making the connection between the gear lever and the other parts of the transmission are simple and facilitated, and are effected without impact, and with considerable smoothness under gradual progression. Finally, no very precise setting of the gear lever and other transmission components is required, neither are abnormal stresses generated in the transmission components during operation due to incorrect component setting.

It is apparent that modifications can be made both to the shape and to the arrangement of the various components of the described transmission without leaving the scope of the invention.

**Claims**

1. A mechanical linkage (8, 9, 14, 18, 17, 19, 20) intended for a heavy vehicle of the kind having:
—a gear-box solidarly mounted on the vehicle frame,
—a tiltable and/or liftable vehicle cab, and
—a gear-shift-lever (1), so mounted on a base-wall (2) of said vehicle cab, that one end (22) thereof protrudes downwards of said base-wall (2),
said mechanical linkage (8, 9, 14, 18, 17, 19, 20) being disposed between said gear-shift-lever (1) and said gear-box, and so arranged as to be:
—connected, in use, with said gear-shift-lever (1), thereby allowing said gear-shift-lever (1) to transmit to said gear-box selecting, respectively, engaging movements required to select, respectively, engage gear-wheel-pairs of said gear-box, and
—disconnected from said gear-shift-lever (1), thereby allowing said base-wall (2), on which said gear-shift-lever (1) is mounted, to be tilted and/or lifted together with said vehicle cab;
said mechanical linkage (8, 9, 14, 18, 17, 19, 20) comprising a transmission bar (8) having a first end connected to said gear-box, and being secured, through a first rocker lever (13), to the vehicle-frame, in such a way as to be able to glide axially along its longitudinal axis (X) and to rotate about said longitudinal axis (X); said first rocker lever (13) having:
—a first end connected to said vehicle-frame for pivotal movement of said first rocker lever (13) in a substantially vertical plane containing said longitudinal axis (X), and
—a second end connected, through a ball-joint (10), to said transmission bar (8), near a second end (9) thereof;
said mechanical linkage (8, 9, 14, 18, 17, 19, 20) further comprising a mechanical assembly (14, 16, 18, 17, 19) which is:
—configured as a crank,

—mounted onto said transmission bar (8) for solidar rotation together therewith around said longitudinal axis (X), and
—provided with a joint element (19, 20) arranged to provide for a two-degrees-of-freedom-connection, in use, with a corresponding head (21) provided on said protruding end (22) of said gear-shift-lever (1);
said mechanical linkage (8, 9, 14, 18, 17, 19, 20) being characterised in that it comprises:
—a crank (14) solidarly mounted onto said second end (9) of said transmission bar (8) for rotation together therewith around said longitudinal axis (X) of said transmission bar (8),
—a second rocker lever (17), whose one end is connected to a radial projection (16) of said crank (14) by means of a hinge (18) whose axis (Y) is orthogonal to said longitudinal axis (X) in order to allow said second rocker lever (17) to rock in a plane containing said longitudinal axis (X) of said trunsmission bar (8), whereas the other end of said second rocker lever (17) is provided with a substantially spherical seat (20) apt to receive and house, in use, a spherical head (21) provided on said protruding end (22) of said gear-shift-lever (1), and in that said second rocker lever (17) is elastically supported by a spring (32) whose one end is connected to a projection (34) provided onto said crank (14), while its other end is connected to a projection (33) provided on to said second rocker lever (17).

2. A mechanical linkage as claimed in claim 1, characterised in that said crank (14) comprises a hun (15) keyed on the said second end (9) of said transmission bar (8), and from which protrudes said radial projection (16).

3. A mechanical linkage as claimed in claim 1 or 2, characterised in that said spherical seat (20) for said spherical head (21) comprises a substantially conical wall (31) disposed above said seat (20) to facilitate the insertion of said spherical head (21) into said coat.

4. A mechanical linkage as claimed in claim 3, characterised in that said spherical seat (20) is formed in a bush (23) of synthetic material inserted into a housing (24) provided in said second rocker lever (17).

5. A mechanical linkage as claimed in one of the preceding claims, characterised in that said projection (33) to which said spring (32) is fixed is disposed in proximity to said spherical seat (20), the other end of said spring being fixed to a projection (34) on said hub (15).

6. A mechanical linkage as claimed in one of the preceding claims, characterised in that said second rocker lever (17) comprises at least two parts (17a, 17b) which can be mutually adjusted axially in order to vary the length of said lever.

7. A mechanical linkage as claimd in claim 6, characterised in that one (17a) of said parts of said second rocker lever (17) comprises a threaded shank (35) arranged for screwing into a corresponding threaded bore (36) provided in the other part (17b) of the lever.

**Patentansprüche**

1. Mechanische Verbindung (8, 9, 14, 18, 17, 19, 20), vorgesehen für ein schweres Fahrzeug, das wie folgt ausgerüstet ist:

—zweckmäßig auf den Fahrzeugrahmen montierter Getriebekasten,

—kippbares und hebbares Führerhaus, und

—Schalthebel (1) in der Art auf eine Grundseite (2) des Führerhauses montiert, daß sich eines seiner Enden (22) nach unten, über besagte Grundseite (2) hinaus, erstreckt.

besagte mechanische Verbindung (8, 9, 14, 18, 17, 19, 20) befindet sich zwischen besagtem Schalthebel (1) und besagtem Getriebekasten, und ist in der Art montiert, daß sie:

—bei Gebrauch, mit besagtem Schalthebel (1) verbunden werden kann, in der Art, daß sie besagtem Schalthebel (1) erlaubt, an besagten Getriebekasten entsprechende-Einrastbewegungen zu übermitteln, die dieser vorher auswählt, jene werden entsprechend Einrastgetriebescheibenpaare des Getriebekastens ausgewählt, und

—von besagtem Schalthebel (1) losgelöst werden kann, in der Art, daß sie besagter Grundseite (2), auf der besagter Schalthebel (1) montiert ist, erlaubt, gemeinsam mit besagtem Führerhaus, gekippt und/oder gehoben zu werden;

besagte mechanische Verbindung (8, 9, 14, 18, 17, 19, 20) besteht aus einer Übertragungsachse (8), deren ersteres Ende mit besagtem Getriebekasten verbunden ist, und die, über einen gebogenen Hebel (13), am Fahrzeugrahmen gesichert ist, in der Art, daß sie in der Lage ist, axial, an ihrer Längsachse entlang, zu gleiten (X) und um diese Längsaches (X) zu rotieren; besagter ersterer gebogener Hebel (13) besteht aus:

—einem ersteren Ende, das mit besagtem Fahrzeugrahmen verbunden ist, um dem besagten ersteren gebogenen Hebel (13) eine rotierende Bewegung auf einer grundsätzlich vertikalen Ebene zu erlauben, die wiederum besagte Längsachse (X) umfaßt, und

—einem zweiten Ende, das durch ein Kugelscharnier (10) mit besagter Übertragungsachse (8), in der Nähe eines gleichen zweiten Endes (9), verbunden ist;

besagte mechanische Verbindung (8, 9, 14, 18, 17, 19, 20) umfaßt weiterhin eine mechanische Vorrichtung (14, 16, 18, 17, 19), die:

—als Kurbel konstruiert ist,

—auf besagte Übertragungsachse (8) montiert ist, um damit eine zweckmäßige Rotation um besagte Längsachse (X), gemeinsam mit dieser, zu erreichen, und

—und mit einem Verbindungselement (19, 20) versehen ist das so montiert ist, daß es eine Verbindung mit zwei Grad Spiel erlaubt, bei Gebrauch mit einem entsprechenden Kopf (21), der auf das überstehende Ende (22) des besagten Schalthebels (1) montiert ist;

besagte mechanische Verbindung (8, 9, 14, 18, 17, 19, 20) ist dadurch gekennzeichnet, daß sie folgende Teile umfaßt:

—eine Kurbel (14), die zweckmäßig auf das besagte zweite Ende (9) der besagten Übertragungsachse (8) montiert ist, um mit dieser gemeinsam um besagte Längsachse (X) besagter Übertragungsachse (8) zu rotieren,

—einen zweiten gebogenen Hebel (17), von dem ein Ende mit einem radialen Vorsprung (16) besagter Kurbel (14) verbunden ist, durch Aufhängevorrichtungen (18), deren Achse (Y) im rechten Winkel zu besagter Längsachse (X) liegt, um besagtem zweiten gebogenen Hebel (17) zu erlauben, sich auf eine Fläche zu biegen, auf der sich besagte Längsachse (X) besagter Übertragungsachse (8) befindet, während das andere Ende des besagten zweiten gebogenen Hebels (17) mit einem grundsätzlich kugelförmigem Sitz (20) versehen ist, in der Art, daß er, während des Betriebens, einen Kugelkopf (21) aufnehmen und beherbergen kann, dieser befindet sich auf besagtem überstehenden Ende (22) des besagten Schalthebels (1), und dadurch, daß besagter zweiter gebogener Hebel (17) elastisch von einer Feder (32) gehalten wird, wobei eines ihrer Enden mit einem Vorsprung (34) verbunden ist, der sich an besagter Kurbel (14) befindet, während das andere ihrer Enden mit einem Vorsprung (33) verbunden ist, der sich auf besagtem zweiten gebogenen Hebel (17) befindet.

2. Mechanische Verbindung nach Anspruch 1, dadurch gekennzeichnet, daß besagte Kurbel (14) aus einer Nabe (15) besteht, die mit besagtem zweiten Ende (9) besagter Übertragungsachse (8) verzahnt ist und von der aus sich besagter radialer Vorsprung (16) erstreckt.

3. Mechanische Verbindung nach Anspruch 1 oder 2, dadurch gekennzeichnet, daß besagter kugelförmiger Sitz (20) für besagten Kugelkopf (21) aus einer grundsätzlich kegelförmigen Fläche (31) besteht, die sich über besagtem Sitz (20) befindet, um das Einführen des besagten Kugelkopfes (21) in besagten Sitz zu erleichtern.

4. Mechanische Verbindung nach Anspruch 3, dadurch gekennzeichnet, daß besagter kugelförmiger Sitz (20), in einer Buchse (23) aus synthetischem Material geformt ist, die sich in einem Gehäuse (24) befindet, das in besagtem zweiten gebogenen Hebel (17) vorgesehen ist.

5. Mechanische Verbindung nach einem der vorangegangenen Ansprüche, dadurch gekennzeichnet, daß besagter Vorsprung (33) an dem besagte Feder (32) befestigt ist, sich in der Nähe des besagten kugelförmigen Sitzes (20) befindet, das andere Ende der besagten Feder ist, an einem Vorsprung (34) auf besagter Nabe (15) befestigt.

6. Mechanische Verbindung nach einem der vorangegangenen Ansprüche, dadurch gekennzeichnet, daß besagter zweiter gebogener Hebel (17) aus mindestens zwei Teilstücken (17a, 17b) besteht, die wechselseitig auf einer Achse eingestellt werden können, um die Länge des besagten Hebels zu verändern.

7. Mechanische Verbindung nach Anspruch 6, dadurch gekennzeichnet, daß eines (17a) der besagten Teilstücke des besagten zweiten gebogenen Hebles (17) aus einem gestreckten Körper (35) besteht, der so montiert ist, daß er in eine entsprechend geschnittene Bohrung (36), die im anderen Teil (17b) des Hebels vorgesehen ist, geschraubt werden kann.

**Revendications**

1. Tringlage mécanique (8, 9, 14, 18, 17, 19, 20) destiné à un véhicule lourd du type comportant:
—une boîte de vitesses montée solidairement sur le châssis de véhicule,
une cabine de véhicule inclinable et/ou soulevable, et
—un levier (1) de changement de vitesse monté sur une paroi de base (2) de ladite cabine du véhicule de manière qu'une première (22) de ses extrémités dépasse vers le bas de ladite paroi de base (2),
ledit tringlage mécanique (8, 9, 14, 18, 17, 19, 20) étant disposé entre ledit levier (1) de changement de vitesse et ladite boîte de vitesses et étant agencé de façon à être:
—relié, lors de l'utilisation, audit levier (1) de changement de vitesse afin de permettre audit levier (1) de changement de vitesse de transmettre à ladite boîte de vitesses des mouvements de sélection et d'engagement demandés pour sélectionner ou respectivement engager des paires de roues dentées de ladite boîte de vitesses, et
—désolidarisé dudit levier (1) de changement de vitesse, afin de permettre à ladite paroi de base (2), sur laquelle ledit levier (1) de changement de vitesse est monté, d'être inclinée et/ou soulevée avec ladite cabine du véhicule;
ledit tringlage mécanique (8, 9, 14, 18, 17, 19, 20) comprenant une barre (8) de transmission ayant une première extrémité reliée à ladite boîte de vitesses, et étant fixée, par l'intermédiaire d'un premier levier oscillant (13), au châssis du véhicule, de façon à pouvoir glisser axialement le long de son axe longitudinal (X) et tourner autour dudit axe longitudinal (X); ledit premier levier oscillant (13) ayant:
—une première extrémité reliée audit châssis du véhicule pour que ledit premier levier oscillant (13) puisse pivoter dans un plan sensiblement vertical contenant ledit axe longitudinal (X), et
—une seconde extrémité reliée, par l'intermédiaire d'un joint à rotule (10), à ladite barre (8) de transmission, à proximité d'une seconde extrémité (9) de cette dernière;
ledit tringlage mécanique (8, 9, 14, 18, 17, 19, 20) comprenant en outre un ensemble mécanique (14, 16, 18, 17, 19) qui est:
—configuré en manivelle,
—monté sur ladite barre (8) de transmission afin de tourner solidairement avec elle autour dudit axe longitudinal (X), et
—muni d'un élément de joint (19, 20) agencé pour établir une liaison à deux degrés de liberté, lors de l'utilisation, avec une tête correspondante (21) prévue sur ladite extrémité en saillie (22) dudit levier (1) de changement de vitesse;

ledit tringlage mécanique (8, 9, 14, 18, 17, 19, 20) étant caractérisé en ce qu'il comporte:
—une manivelle (14) montée solidairement sur ladite seconde extrémité (9) de ladite barre (8) de transmission afin de tourner avec elle autour dudit axe longitudinal (X) de ladite barre (8) de transmission,
—un second levier oscillant (17) dont une extrémité est reliée à une saillie radiale (16) de ladite manivelle (14) au moyen d'une charnière (18) dont l'axe (Y) est orthogonal audit axe longitudinal (X) afin de permettre audit second levier oscillant (17) d'osciller dans un plan contenant ledit axe longitudinal (X) de ladite barre (8) de transmission, alors que l'autre extrémité dudit second levier oscillant (17) est munie d'un siège sensiblement sphérique (20) apte à recevoir et loger, lors de l'utilisation, une tête sphérique (21) prévue sur ladite extrémité (22) en saillie dudit levier (1) de changement de vitesse, et en ce que ledit second levier oscillant (17) est supporté élastiquement par un ressort (32) dont une extrémité est reliée à une saillie (34) prévue sur ladite manivelle (14), tandis que son autre extrémité est reliée à une saillie (33) prévue sur ledit second levier oscillant (17).

2. Tringlage mécanique selon la revendication 1, caractérisé en ce que ladite manivelle (14) comprend un moyeu (15) claveté sur ladite seconde extrémité (9) de ladite barre (8) de transmission et duquel dépasse ladite saillie radiale (16).

3. Tringlage mécanique selon la revendication 1 ou 2, caractérisé en ce que ledit siège sphérique (20) pour ladite tête sphérique (21) comprend une paroi sensiblement conique (31) disposée au-dessus dudit siège (20) afin de faciliter l'insertion de ladite tête sphérique (21) dans ledit siège.

4. Tringlage mécanique selon la revendication 3, caractérisé en ce que ledit siège sphérique (20) est réalisé sous la forme d'une douille (23) en matière synthétique insérée dans un logement (24) prévu dans ledit second levier oscillant (17).

5. Tringlage mécanique selon l'une des revendications précédentes, caractérisé en ce que ladite saillie (33) à laquelle ledit ressort (32) est fixé est disposée à proximité dudit siège sphérique (20), l'autre extrémité dudit ressort étant fixée à une saillie (34) sur ledit moyeu (15).

6. Tringlage mécanique selon l'une des revendications précédentes, caractérisé en ce que ledit second levier oscillant (17) comprend au moins deux parties (17a, 17b) qui peuvent être ajustées mutuellement axialement pour faire varier la longueur dudit levier.

7. Tringlage mécanique selon la revendication 6, caractérisé en ce que l'une (17a) desdites parties dudit second levier oscillant (17) comprend une tige filetée (35) agencée pour être vissée dans un trou taraudé correspondant (36) prévu dans l'autre partie (17b) du levier.

Fig.1

Fig. 2